Europäisches Patentamt

European Patent Office

Office européen des brevets

(11) Publication number: **0 515 322 A1**

# EUROPEAN PATENT APPLICATION

(21) Application number: **92830229.8**

(22) Date of filing: **15.05.92**

(51) Int. Cl.⁵: **A61H 33/00**, F16K 13/00, F16K 1/22

(30) Priority: **16.05.91 IT VI910082**

(43) Date of publication of application:
**25.11.92 Bulletin 92/48**

(84) Designated Contracting States:
**AT BE CH DE DK ES FR GB GR LI LU MC NL PT SE**

(71) Applicant: **MERLONI TERMOSANITARI S.p.A.**
**Viale Aristide Merloni, 45**
**I-60044 Fabriano (Ancona)(IT)**

(72) Inventor: **Calearo, Giuseppe**
**Via Muzzi, 68**
**I-36050 Sovizzo (VI)(IT)**

(74) Representative: **Iannone, Carlo Luigi**
**Ing. Barzanò & Zanardo Roma S.p.A. Via Piemonte, 26**
**I-00187 Roma(IT)**

(54) **Flowrate adjuster for hydromassage installations.**

(57) This invention realizes a member for adjusting the flowrate to the delivery nozzles (23) which are arranged inside an immersion tub (22) of a hydromassage installation (21). Each adjustment member (1) is connected through a pipe (24) to a delivery nozzle (23) and has an outer body (2) inside which a fluid flow conduit (4) is realized, in which conduit a movable diaphragm (5) is arranged transversely, said diaphragm being capable of rotating about a pivot (3) which is integral with the outer body (2). The opening position control of the movable diaphragm (5) occurs directly through the pressure exerted by the water flow (8), whereas the closure control is realized through a force (13) exerted on the movable diaphragm itself by a maneuvring member (12) which belongs to a control device.

F I G .2

This invention relates to the realization of a delivery nozzle flowrate adjustment member of a hydromassage or underwater massage installation.

It is well known that hydromassage installations are essentially made up of an immersion tub which is provided with a plurality of delivery nozzles which are arranged inside the tub itself, said nozzles being connected through pipes to a distribution body which is fed through a pipe by water coming from the drain of the tub, said water being circulated in a closed circuit through a pump.

In hydromassage installations of a more advanced type, the delivery nozzle flowrate adjustment members are applied directly to the distribution body at the point corresponding to each delivery connection. As regards said adjustment members, generally they consist of valves or of taps or faucets which are maneuvered by the person immersed in the tub, when such means are arranged in a sufficiently close and comfortable position to reach, ore otherwise such means are maneuvred through suitable control devices, when the same are installed at a position which is not easily accessible.

The adjustment members mentioned above are affected by some drawbacks.

When the adjustment members are valves, which as is well known are made up of a plug applied to the end of a stem having a screw coupled to a nut thread which is fastened to the body of the valve, they have the drawback that, in order to obtain the complete opening or the complete closure of the plug, it is necessary to rotate the stem to which the plug is applied many times. Accordingly, the adjustment of flowrate is a long and toilsome operation, the more when the delivery nozzles to adjust are numerous. Unfortunately, because of the unavoidable friction of the stem against the gaskets and the friction of the screw against the nut thread, valves also require a maneuvring effort of a quite remarkable extent, said effort becoming increasingly strong because of the unavoidable formation in time of scales and oxidized portions.

On the contrary, when the adjustment members are faucets, which as is known are made up of a male member that rotates within a housing obtainede in the body of the faucet itself, they give the advantage of being very fast maneuvrable because their complete opening or closure can be realized by means of a simple rotation of the male member through 90°. However, faucets have together with such advantage also the drawback of requiring a stronger maneuvring effort with respect to the effort required by valves, because of the very high contact surface between the male member and the body. Moreover, also in the case of faucets such effort shows a tendency to increase in time because of oxidation and of the scales that are formed during their employment.

The very high maneuvring effort required by valves as well as by faucets gives also the additional drawback that the sensitivity of adjustment is very poor and decreases in time when either valves or faucets are employed.

Such maneuvring difficulties also give rise to difficulties in the employment of maneuvring members for driving such adjustment means, which maneuvring members intervene through control device which are provided with actuators and with motion transmission members. Indeed, it is well known that said control devices, as for instance the control device which is the object of the filing number VI91A000080, in the name of the same inventor, allow the adjustment members to be controlled from a distant place in a very accurate way, but they are not capable of giving too high torques. Accordingly, when there is a strong friction between the component members of the adjustment devices themselves because of oxidation or of scales, said control devices become useless. Indeed, it is an object of this invention to overcome the drawbacks mentioned above.

In particular, it is a main object of this invention the realization of a delivery nozzle flowrate adjustment member in a hydromassage installation, that asks for a limited actuation effort.

It is a further object of this invention the obtainment of an adjustment member which is not subjected to the formation of scales and oxidized portions, which phenomena cause in time an increase in maneuvring effort.

It is a further object of this invention to supply an adjustment member that allows the flowrate to be adjusted rapidly. Last but not least, it is an object of this invention the obtainment of an adjustment member which is very sensitive.

The objects mentioned above are obtained through the realization of a delivery nozzle flowrate adjustment member for a hydromassage installation, which member, according to the main claim, comprises an immersion tub which is provided with a plurality of delivery nozzles which are fed by the same number of pipes connected to the delivery connections of a distribution body, which is fed in turn through a pump with water coming from the drain of th tub, wherein said flowrate adjustment member is characterized in that it has an outer body connected to the distribution body at a point corresponding to a delivery connection, inside which a diaphragm is placed for interfering with the water flow, said diaphragm being movable transversely inside a flow pipe realized in the outer body, where said movable diaphragm is controlled for its opening directly by the water flow pressure, whereas it is controlled for its closure by the force exerted by a maneuvring member belonging to a control device connected to the same.

According to a preferred embodiment of this invention, the adjustment member has an outer body in which the conduit for the water flow is obtained, inside which body a diaphragm is arranged which is set into circular motion about a pivot to which the diaphragm itself is hinged.

The diaphragm is hinged at the point corresponding to an end so that when it is hit by the water flowing in the pipe through the flow conduit, the diapfragm rotates and opens automatically. Its closure occurs vice-versa through rotation in the opposite sense through the mechanical action of a maneuvring member belonging to a control device. The objects disclosed above are better put into evidence while disclosing a preferred embodiment of this invention, which is given just for illustration purposes and not for limitative purposes, such embodiment being shown in the enclosed drawings wherein:

- Figure 1 shows the adjustment member of this invention as applied to the distribution body of a hydromassage installation;
- Figure 2 shows the adjustment member of this invention as an axonometric projection;
- Figure 3 shows the adjustment member of this invention represented by a longitudinal cross-sectional view, the movable diaphragm being in the closed position;
- Figure 4 shows the adjustment member of Figure 3, the diaphragm being in the open position.

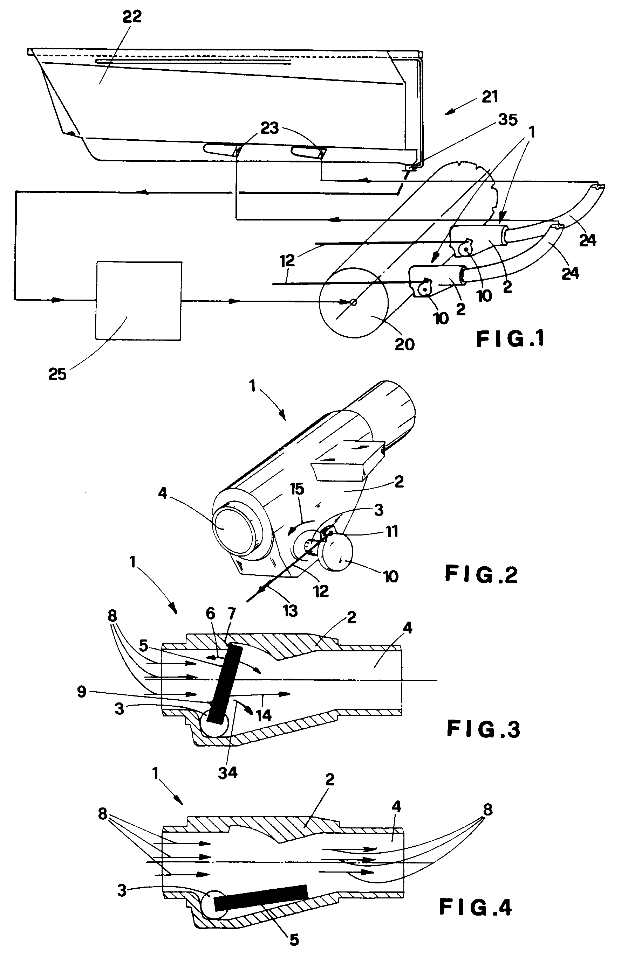

As illustrated in Figure 1, a plurality of the adjustment members of this invention, each one of them being pointed out in all by the numeral 1, are applied to the dis tribution body 20 of a hydromassage installation, which is pointed out in all by the numeral 21 and that comprises an immersion tub 22 which is provided with a plurality of delivery nozzles 23, each one of said nozzles being connected through a pipe 24 to an adjustment member 1 that relates to the same. The adjustment member 1 of this invention is shown also in Figure 2 wherein it can be observed that it comprises an outer body 2 from which a pivot 3 projects which, as can be observed also in Figures 3 and 4, supports a diaphragm 5 which is arranged transversely with respect to a pipe 4 which is obtained inside the outer body 2 and which can be caused to rotate about the pivot 3 that supports the same.

The rotation of the diaphragm 5 is realized from the outside through the connecting rod 10 and the rotation can occur in both directions, i.e. the clockwise and the anti-clockwise direction, pointed out by the arrows 6, so that the diaphragm 5 can take on any position between the two extreme positions represented in Figures 3 and 4.

As can be observed in Figure 3, when the diaphragm 5 is so arranged as to abut against the tooth 7 inside the conduit 4, it stops the flow 8 through the conduit 4 itself, whereas when it is arranged almost horizontally, as can be observed in Figure 4, it allows the passage of the same flow 8 through the same conduit 4.

In particular when the diaphragm 5 is arranged as in Figure 3 so as to stop the flow 8, this gives rise to a pressure against its surface 9, which pressure gives rise in turn to a force 14 and then to a torque 34 that causes the same to rotate in the clockwise direction so as to arrange it horizontally, as shown in Figure 4. It is well evident that in such conditions, the full flowrate allowed by the inside diameter of the conduit 4 flows through the conduit 4 itself depending on the throughput of the pump 25 that feeds the distribution body 20 with water coming from the drain 35 of the tub, unless a counteracting torque, acting on the pivot 3 of the diaphragm 5, generates a force opposite to the force 14 and prevents the diaphragm 5 from opening or causes the diaphragm 5 to open just partially.

In order to cause the diaphragm 5 to open partially so as to adjust the flowrate through the conduit 4 and consequently to the delivery nozzles 23, the connecting rod 10 applied to the pivot 3 of the diaphragm is provided with a hole 11 to which a maneuvring member is fastened, said member in the case disclosed herein being a flexible cable 12 that belongs to a control device which is not shown in the figure.

Said control device, suitably adjusted by the user, which can be made up for instance of a lever or of a hand-wheel or any other means, exerts a force 13 on the flexible cable 12, said force being transmitted to the connecting rod 10 and giving rise to a torque 15 which is applied to the pivot 3 that counteracts the torque 34 in the opposite direction which is generated by the force 14 and is caused by the pressure of the fluid flow 8 on the surface 9 of the diaphragm 5. The various equilibrium positions between the torque 15 and the counteracting torque 34 which is generated by the force 14, correspond to different situations of partial opening of the diaphragm and then to different conditions of flowrate to the delivery nozzles 23.

It can be easily understood that the adjustment member 1 of this invention can anyway be controlled by any control device that can drive any maneuvring member which can also be different from said flexible wire 12.

Advantageously, anyway, the flowrate adjustment member of this invention is driven through the control device which is the object of the application with the file number VI91A000080 in the name of the same inventor, through which the position of the movable diaphragm 5 can be recorded with high precision and very easily.

Moreover, as a result of the structure of the movable diaphragm 5, which as already shown can rotate about a pivot 3 of small diameter, friction is very low and it is very difficult that due to prolonged employment scales are formed that make the maneuvring of said movable diaphragm 5 more difficult and laborious. Hence, the adjustment member of this invention keeps its sensitivity unaltered in time. The operation is also extremely reliable because the control device acts on the movable diaphragm 5 just for adjusting its position for the full or partial closure as the opening position is determined automatically by the pressure exerted by the fluid flow 8 due to the force 13 acting on the flexible cable 12 and that generates the closure torque 15.

Accordingly, it is easily uinderstandable on th basis of the above disclosure that the adjustment member of the present invention attains all the objects which it aimed at and allows also all the advantages disclosed above to be obtained.

Structural modifications can be introduced in the adjustment member of this invention during its construction, such changes being intended for improving its functionality or for making its construction cheaper.

Anyway, it is to be understood that said possible variants are all to be considered as belonging to the spirit and scope of the present invention for which a priority right is claimed.

**Claims**

1. Adjustment member (1) for adjusting the flowrate to the delivery nozzles (23) in a hydromassage installation (21), said installation comprising an immersion tub (22) which is provided with a plurality of delivery nozzles (23) fed by an equal number of pipes (24) which are connected to the delivery connections of a distribution body (20) which is fed in turn through a pump (25) with water coming from the drain (35) of the tub, wherein said member (1) for the adjustment of the flowrate is characterized in that it has an outer body (2) which is connected to the distribution body (20) at the point corresponding to a delivery connection, inside which a diaphragm (5) is arranged for intercepting the fluid flow, said diaphragm being movable transversely inside a fluid flow conduit (4) which is realized within the outer body (2), wherein said movable diaphragm (5) is controlled as to its opening directly by the pressure of the water flow (8) whereas it is controlled as to its closure by the force (13) exerted by a maneuvring member (12) belonging to a control device connected to the same.

2. An adjustment member according to claim 1, characterized in that the movable diaphragm (5) is hinged to the outer body (2) through a pivot (3) about which it can rotate.

3. An adjustment member according to claim 2, characterized in that the pivot (3) projects out of the outer body (2) of said adjustment member (1) and has a connecting rod (10) at the point corresponding to the projecting end, said connecting rod being provided with a hole (11) to which the end of the maneuvring member (12) is applied.

**FIG.1**

**FIG.2**

**FIG.3**

**FIG.4**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-2 105 379 (SCHUMACHER)<br>* claim 5; figures 1,2 *<br>--- | 1-3 | A61H33/00<br>F16K13/00<br>F16K1/22 |
| Y | GB-A-1 540 314 (WHEATLEY JNR.)<br>* page 2, line 94 - line 115; figures *<br>--- | 1-3 | |
| A | FR-A-2 276 524 (MASCHINENFABRIK AUGSURG-NÜRNBERG AG.)<br>* page 3, line 38 - page 4, line 39; figures *<br>----- | 1-3 | |

TECHNICAL FIELDS
SEARCHED (Int. Cl.5)

A61H
F16K

The present search report has been drawn up for all claims

| Place of search | Date of completion of the search | Examiner |
|---|---|---|
| THE HAGUE | 29 SEPTEMBER 1992 | Mark Jones |